# EUROPÄISCHE PATENTSCHRIFT

(11) **EP 2 164 736 B1**
(45) Veröffentlichungstag und Bekanntmachung des Hinweises auf die Patenterteilung: **10.08.2011**
(21) Anmeldenummer: 08759484.2
(22) Anmeldetag: 09.05.2008
(51) Int. Cl.: B60W 20/00, B60W 30/18, B60W 30/20, B60W 10/06, B60W 10/08, B60W 10/10, B60K 6/52

(54) **VERFAHREN ZUM BETREIBEN EINES HYBRIDANTRIEBS EINES FAHRZEUGS**
METHOD FOR OPERATING A HYBRID DRIVE OF A VEHICLE
PROCÉDÉ DE FONCTIONNEMENT D'UN ENTRAÎNEMENT HYBRIDE DE VÉHICULE

(30) Priorität: 16.05.2007 DE 102007023164
(43) Veröffentlichungstag der Anmeldung: 24.03.2010
(73) Patentinhaber: Robert Bosch GmbH, 70442 Stuttgart (DE)
(72) Erfinder: FALKENSTEIN, Jens-Werner, 73434 Aalen (DE); GLORA, Michael, 71706 Markgroeningen (DE)
(86) Internationale Anmeldenummer: PCT/EP2008/055747
(87) Internationale Veröffentlichungsnummer: WO 2008/138886

(56) Entgegenhaltungen:
- EP-A- 1 431 623
- EP-A- 1 632 378
- DE-A1- 10 126 348
- US-B1- 6 319 168

## Beschreibung

Die Erfindung betrifft ein Verfahren zum Betreiben eines Hybridantriebs eines Fahrzeugs, insbesondere eines Kraftfahrzeugs, mit mindestens einem Verbrennungsmotor und mindestens einer ersten elektrischen Maschine als Antriebsmaschinen eines ersten Antriebsstrangs des Fahrzeugs und einem zugeordneten ersten Getriebe, wobei das Gesamtmoment der Antriebsmaschinen bei einem Schalten des Getriebes angepasst wird, um die Last am Getriebe zu reduzieren und/oder Drehzahlen entsprechend dem neuen Übersetzungsverhältnis zu verändern, und/oder der Momentgradient der Antriebsmaschinen bei einem Übergang zwischen Zug- und Schubbetrieb auf einen vorgebbaren, maximalen Momentgradienten des resultierenden Gesamtmoments der Antriebsmaschinen des ersten Antriebsstrangs begrenzt wird.

### Stand der Technik

Ein derartiges Verfahren zum Betreiben eines Hybridantriebs eines Fahrzeugs ist bekannt. Bei Hybridantrieben werden meist der Verbrennungsmotor, eine oder mehrere elektrische Maschinen und ein Getriebe des ersten Antriebsstranges zu einer Antriebseinheit zusammengefügt und gemeinsam im Fahrzeug gelagert. Die Antriebseinheit ist über weiche Lagerungselemente mit einer Fahrzeugkarosserie des Fahrzeugs verbunden, um die vom Verbrennungsmotor erzeugten Schwingungen sowie Körperschall von der Fahrzeugkarosserie abzuhalten.

Schnelle Laständerungen können ein unerwünschtes Ruckeln des Fahrzeuges erzeugen, bei dem typischerweise die Drehmasse der Antriebseinheit gegen die reduzierte Fahrzeugmasse schwingt. Daneben sind noch weitere Schwingungsformen möglich. Bekannte Verfahren zur Minderung von Ruckelschwingungen basieren darauf, die Anregung des ersten Antriebsstranges durch schnelle Laständerungen zu vermeiden. Dazu wird das vom Fahrer über das Fahrpedal angeforderte Drehmoment bei schnellen Momentänderungen, beziehungsweise hohen Momentgradienten, mittels einer Führungsformeinheit mit einem Tiefpass gefiltert und/oder dessen Momentgradient auf einen maximalen Momentgradienten begrenzt. Damit verzögert sich der Drehmomentaufbau beziehungsweise -abbau. Ein Nulldurchgang des resultierenden Gesamtmoments der Antriebsmaschinen des ersten Antriebsstrangs, zum Beispiel beim Übergang vom Schub- in den Zugbetrieb führt zu einem Nulldurchgang des Reaktionsmomentes und zu einem Kippen der Antriebseinheit in den weichen Lagerungselementen, wodurch Schwingungen des ersten Antriebsstrangs anregt werden. Daneben werden im Antriebsstrang vorhandene mechanische Spiele beziehungsweise Lose durchlaufen. Aus Komfortgründen soll dieser Übergang "weich" erfolgen, was durch Gradientenbegrenzung des resultierenden Gesamtmoments der Antriebsmaschinen des ersten Antriebsstrangs während seines Nulldurchgangs erreicht wird. Auch dies ist Aufgabe der Führungsformeinheit. Diese koordiniert die Antriebsmaschinen, insbesondere die Antriebsmomente der Antriebsmaschinen (Verbrennungsmotor und erste elektrische Maschine) des ersten Antriebsstrangs. Bei einem als Parallelhybridantrieb ausgebildeten Hybridantrieb mit Kurbelwellenstartergenerator als elektrischer Maschine, wobei insbesondere ein Schwungrad des Verbrennungsmotors mit der elektrischen Maschine gekoppelt ist, wird ein Kippen der Antriebseinheit von dem Nulldurchgang des Summenmomentes von Verbrennungsmotor und elektrischer Maschine hervorgerufen.

Beim Schalten des Getriebes des ersten Antriebsstrangs müssen Antriebsmomente möglichst schnell den beim Schaltvorgang geltenden Anforderungen angepasst werden, um schnelle, komfortable Schaltvorgänge zu ermöglichen. Dazu werden die Antriebsmaschinen des ersten Antriebsstrangs koordiniert angesteuert. Das Gesamtmoment der Antriebsmaschinen wird bei dem Schalten des Getriebes angepasst, um die Last am Getriebe zu reduzieren und/oder um Drehzahlen - insbesondere von trägen Massen - entsprechend dem neuen Übersetzungsverhältnis zu verändern. Beim Parallelhybrid mit Kurbelwellenstartergenerator als elektrischer Maschine wirkt zum Beispiel das Summenmoment von Verbrennungsmotor und elektrischer Maschine am Eingang des ersten Getriebes des ersten Antriebsstranges. Kann dieses

### Neue Seite 3 und 4 im Austausch mit der bisherigen Seite 3 und 4

### (Änderungen sind unterstrichen)

### (Einfügen des SdT bereits mit Schreiben vom 12.07.2010 erfolgt)

Getriebe nicht unter Last geschaltet werden, so muss das Summenmoment während der Schaltvorgänge auf Null gebracht werden. Dies kann je nach Betriebszustand durch Erniedrigen des Antriebsmoments der elektrischen Maschine erfolgen, aber auch durch Erhöhen, zum Beispiel, wenn das Summenmoment vor dem Schaltvorgang negativ ist.

Aus der gattungsbildenden DE 101 26 348 ist ein Antriebsstrang bekannt, welcher zwei Drehmomentwege umfasst, wobei mittels Ansteuerung des zweiten Drehmomentweges die Zugkraftunterbrechung des ersten Drehmomentweges kompensiert wird.

Die EP 1632 378 offenbart einen Antriebsstrang mit mehreren elektrischen Maschinen. Hierzu wird ein Verfahren offenbart, wie zwischen den verschiedenen Betriebsmodi eines Hybridfahrzeuges gewechselt werden kann.

### Offenbarung der Erfindung

Zur Erhöhung der Dynamik des Fahrzeugs ist vorgesehen, dass die beim Anpassen und/oder bei der Begrenzung für einen verstärkt motorischen Betrieb der ersten elektrischen Maschine zusätzlich benötigte Energie von der zweiten elektrischen Maschine zusätzlich erzeugt oder weniger verbraucht wird. Unter einer Begrenzung des Momentgradienten auf einen maximalen Momentgradienten ist im Zusammenhang mit dieser Anmeldung immer die Begrenzung auf einen maximalen Momentgradientenbetrag zu verstehen. Die Begrenzung erfolgt insbesondere mittels mindestens einer Führungsformeinheit, die das vom Fahrer über das Fahrpedal angeforderte Drehmoment bei schnellen Momentänderungen, beziehungsweise hohen Momentgradienten mit einem Tiefpass filtert und/oder dessen Momentgradient auf einen maximalen Momentgradienten begrenzt. Durch diese Begrenzung wird ein unerwünschtes Ruckeln des Fahrzeugs durch eine Relativbewegung des Verbrennungsmotors und/oder der ersten elektrischen Maschine und/oder des dem Verbrennungsmotors und der ersten elektrischen Maschine zugeordneten ersten Getriebes beim Übergang zwischen Zug- und Schubbetrieb unterdrückt oder vermieden. Die Begrenzung des Momentgradienten im ersten Antriebsstrang erstreckt sich zum Beispiel über einen Zeitraum, in dem die erste elektrische Maschine zeitweise zur Reduktion des resultierenden Moments verstärkt im generatorischen Betrieb arbeitet. Die dadurch zusätzlich erzeugte elektrische Energie wird, insbesondere ohne Zwischenspeicherung, der zweiten elektrischen Maschine zugeführt, die das Fahrzeug über den zweiten Antriebsstrang antreibt

und so die Reduktion des Moments im ersten Antriebsstrang - zumindest teilweise - bezogen auf den Gesamtantrieb des Fahrzeugs kompensiert. Die zweite elektrische Maschine ist unabgängig von den Antriebsmaschinen des ersten Antriebsstrangs im Fahrzeug gelagert. Die Lagerung der zweiten elektrischen Maschine ist insbesondere straffer als die Lagerung der Antriebsmaschinen. Es ergibt sich eine vorteilhafte Ausnutzung der beim Begrenzen des Momentgradienten am ersten Antriebsstrang gewonnenen elektrischen Energie durch die zweite elektrische Maschine am zweiten Antriebsstrang. Entsprechende Vorteile ergeben sich bei der Anpassung des Gesamtmoments der Antriebsmaschinen des ersten Antriebsstrangs.

In einer vorteilhaften Ausgestaltung der Erfindung ist vorgesehen, dass die beim Anpassen und/oder bei der Begrenzung durch einen verstärkt generatorischen Betrieb der ersten elektrischen Maschine zusätzlich entstehende elektrische Energie von mindestens einer weiteren, zweiten elektrischen Maschine zum Antreiben mindestens eines weiteren Antriebsstrangs für den Antrieb des Fahrzeugs genutzt wird.

In einer vorteilhaften Ausgestaltung der Erfindung ist vorgesehen, dass die Antriebsmaschinen über den ersten Antriebsstrang mindestens eine erste Antriebsachse des Fahrzeugs antreiben und die zweite elektrische Maschine über den zweiten Antriebsstrang mindestens eine zweite Antriebsachse des Fahrzeugs antreibt. Der Hybridantrieb kann zum Beispiel ein Hybrid-Allradantrieb sein.

Nach einer Weiterbildung der Erfindung ist vorgesehen, dass der maximale Momentgradient der Begrenzung so gewählt ist, dass eine gemeinsame Lagerung von Verbrennungsmotor und/oder erster elektrischer Maschine und/oder erstem Getriebe ruckfrei von einer ersten Endstellung in eine entgegengesetzte, zweite Endstellung verlagert wird. Durch einen hohen Momentgradienten kommt es aufgrund der weichen Lagerung der Antriebsmaschinen zu deren ruckartigem Verlagern relativ zu einer Fahrzeugkarosserie des Fahrzeugs, bei der die gemeinsame Lagerung von der ersten Endstellung in die entgegengesetzte, zweite Endstellung verlagert wird. Dort wird die Bewegung ruckartig reflektiert und es entstehen unerwünschte Schwingungen. Die Antriebsmaschinen und das zugeordnete Getriebe bilden vorzugsweise eine Einheit und sind als diese Einheit gemeinsam "weich" gelagert.

In einer vorteilhaften Ausgestaltung der Erfindung ist vorgesehen, dass die Anpassung des Gesamtmoments der Antriebsmaschinen des ersten Antriebsstrangs durch eine Moment- und/oder Leistungsanpassung der ersten elektrischen Maschine und/oder eine Veränderung des Zündwinkels des Verbrennungsmotors in vorgegebenen Änderungsgrenzen erfolgt. Vorzugsweise erfolgt die Anpassung durch eine Moment- und/oder Leistungsanpassung der ersten elektrischen Maschine.

Mit Vorteil ist vorgesehen, dass die Begrenzung durch eine Moment- und/oder Leistungsanpassung der ersten elektrischen Maschine und/oder eine Veränderung des Zündwinkels des Verbrennungsmotors in vorgegebenen Änderungsgrenzen erfolgt. Vorzugsweise erfolgt die Begrenzung durch eine Moment- und/oder Leistungsanpassung der ersten elektrischen Maschine. Der Verbrennungsmotor ist insbesondere als Ottomotor ausgebildet. Ottomotoren mit Saugrohreinspritzung besitzen meist eine elektronische Drosselklappe zur Luftmassenstromregulierung. Das Fahrpedal ist von der elektronischen Drosselklappe mechanisch entkoppelt. Die endliche Einstellgeschwindigkeit des Drosselklappenstellgliedes und dynamische Füllungseffekte im Saugrohr lassen eine hochdynamische Einstellung eines vorgegebenen Luftmassenstromes und des dadurch erzeugten Verbrennungsmotordrehmomentes nicht zu. Ein Eingriff in den Zündwinkel und eine damit verbundene Reduzierung des Verbrennungsmotordrehmomentes kann dagegen nahezu verzögerungsfrei erfolgen. Zündwinkeleingriffe führen jedoch zu Wirkungsgradverlusten und bei hoher Last zu Temperaturspitzen im Abgas, die zu Schäden oder Lebensdauerbeeinträchtigungen an Bauteilen wie zum Beispiel Turbolader oder Katalysator fuhren können. Zündwinkeleingriffe werden in folgenden nicht weiter betrachtet.

Die Erfindung betrifft weiterhin eine Steuerungseinheit zur Durchführung mindestens eines vorstehend genannten Verfahrens. Die Steuerungseinheit koordiniert insbesondere die Momente und/oder die Momentgradienten der Antriebsmaschinen des ersten Antriebsstrangs und das Moment und den Momentgradienten der zweiten elektrischen Maschine. In der Steuerungseinheit ist vorzugsweise die mindestens eine Führungsformeinheit implementiert. Die Steuerungseinheit ist zum Beispiel eine den Steuergeräten der Antriebsmaschinen Verbrennungsmotor und erster elektrischer Maschine, sowie der zweiten elektrischen Maschine übergeordnete Steuerungseinheit, wobei die Koordinierung der Momente/Momentgradienten durch Ansteuerung der Steuergeräte (Motorsteuergeräte des Verbrennungsmotors und der elektrischen Maschinen) erfolgt. Alternativ ist die Steuerungseinheit in einem der Steuergeräte implementiert. Vorzugsweise ist die Steuerungseinheit in dem Steuergerät des Verbrennungsmotors implementiert. Dies ist Vorteilhaft, da auch in Steuergeräten von Verbrennungsmotoren herkömmlicher (rein verbrennungsmotorischer) Antriebskonzepte mindestens eine Führungsformeinheit implementiert ist.

### Kurze Beschreibung der Zeichnungen

Die Erfindung wird nachfolgend in einem Ausführungsbeispiel anhand der zugehörigen Zeichnungen näher erläutert. Es zeigen:
- Figur 1: ein Fahrzeug mit einer von einem Verbrennungsmotor und einer ersten elektrischen Maschine angetriebenen ersten Antriebsachse und mit einer von einer zweiten elektrischen Maschine angetriebenen zweiten Antriebsachse,
- Figur 2: ein Blockschaltbild, das die Funktionsweise einer Steuerung des Verbrennungsmotors und der elektrischen Maschinen des Hybridantriebs angibt,
- Figur 3: ein Diagramm, bei dem ein Fahrerwunschmoment, ein von einer Führungsformeinheit vorgegebenes Solldrehmoment und die Momente des Verbrennungsmotors und der ersten elektrischen Maschine über der Zeit aufgetragen ist und
- Figur 4: ein Diagramm, bei dem das Fahrerwunschmoment, das Solldrehmoment, ein Summen-Sollmoment der elektrischen Maschinen und ein resultierendes Summen-Sollmoment der beiden Antriebsachsen über der Zeit aufgetragen ist.

### Ausführungsform(en) der Erfindung

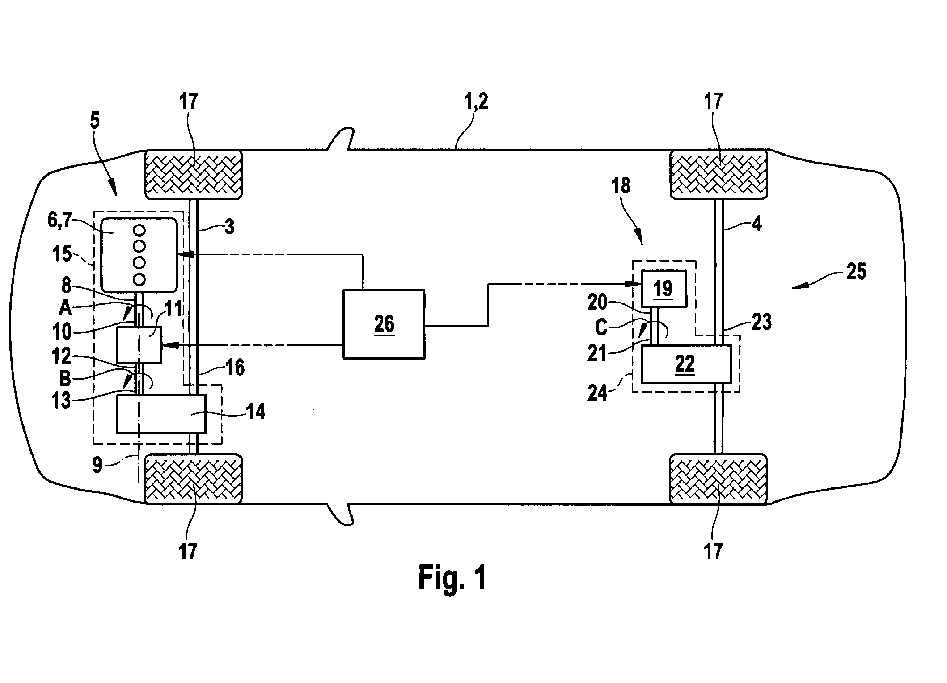

Figur 1 zeigt eine Draufsicht auf ein als Kraftfahrzeug 1 ausgebildetes Fahrzeug 2 mit einer ersten Antriebsachse 3 und einer zweiten Antriebsachse 4. In einem ersten Antriebsstrang 5, der die erste Antriebsachse 3 antreibt, ist ein als Ottomotor 6 ausgebildeter Verbrennungsmotor 7 angeordnet. Ein Abtriebsstrang 8 des Verbrennungsmotors 7 liegt auf einer Achse 9 und führt über eine erste, nicht dargestellte schaltbare Kupplung zu einem ebenfalls auf der Achse 9 liegenden Antriebs-/Abtriebsstrang 10 einer ersten elektrischen Maschine 11. Verbrennungsmotor 7 und erste elektrische Maschine 11 sind Antriebsmaschinen 7, 11 des ersten Antriebsstrangs 5, der die erste Antriebsachse 3 antreibt. Ein gemeinsamer Abtriebsstrang 12 von Verbrennungsmotor 7 und erster elektrischer Maschine 11 ist über eine ebenfalls nicht dargestellte, zweite schaltbare Kupplung mit einem Getriebeantriebsstrang 13 eines ersten Getriebes 14 verbunden. Das Getriebe 14, der Verbrennungsmotor 7 und die erste elektrische Maschine 11 bilden eine Einheit 15, die in einer nicht dargestellten Fahrzeugkarosserie des Fahrzeugs 2 "weich" gelagert ist. Ein Getriebeabtriebsstrang 16 ist mit der ersten Antriebsachse 3 verbunden und treibt die beiden Antriebsräder 17 dieser Antriebsachse 3 an. Der Verbrennungsmotor 7 erzeugt an seinem Abtriebsstrang 8 ein Istdrehmoment Eng_trqBs (Pfeil A). Die erste elektrische Maschine 11 erzeugt an ihrem Antriebs-/Abtriebsstrang 10 ein Istdrehmoment EIM1_trq. Am Getriebeantriebsstrang 13 des ersten Getriebes 14 liegt somit das Moment Eng_trqBs + EIM1_trq (Pfeil B) an.

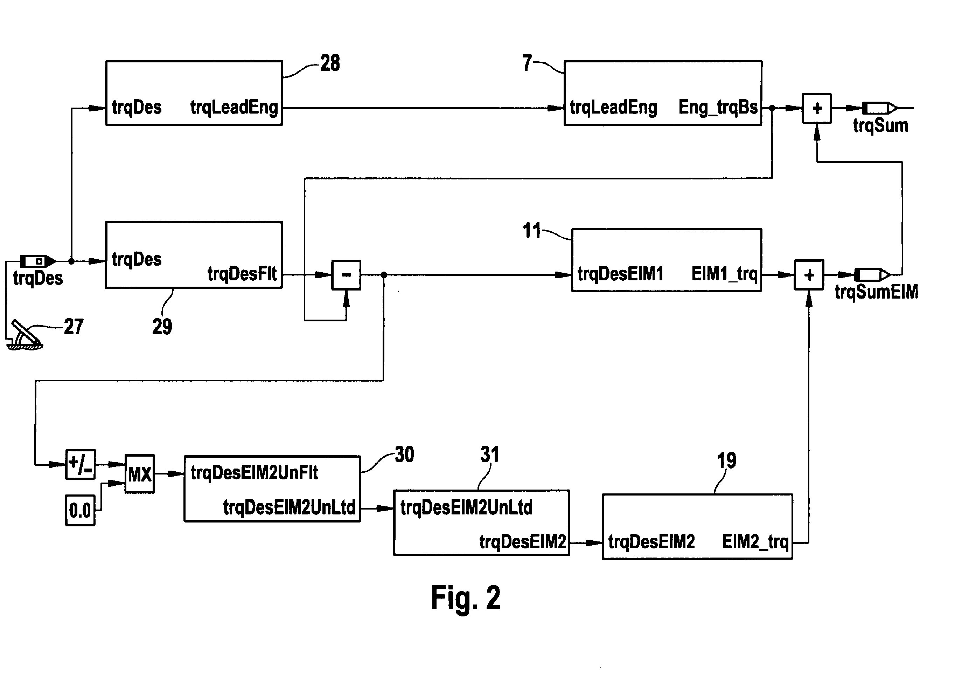

In einem zweiten Antriebsstrang 18, der die zweite Antriebsachse 4 antreibt, ist eine zweite elektrische Maschine 19 angeordnet. Ein Antriebs-/Abtriebsstrang 20 der zweiten elektrischen Maschine 19 führt über eine weitere, nicht dargestellte schaltbare Kupplung zu einem Getriebeantriebsstrang 21 eines zweiten Getriebes 22. Die zweite elektrische Maschine 19 erzeugt an ihrem Antriebs-/Abtriebsstrang 20 ein Istdrehmoment EIM2_trq (Pfeil C). Ein Getriebeabtriebsstrang 23 des zweiten Getriebes 22 ist mit der zweiten Antriebsachse 4 verbunden. Diese zweite Antriebsachse 4 treibt ebenfalls zwei Antriebsräder 17 an. Das Getriebe 22 und die zweite elektrische Maschine 19 bilden eine Einheit 24, die in der nicht dargestellten Fahrzeugkarosserie des Fahrzeugs 2 "straff" gelagert ist. Die beiden Einheiten 15, 24 sind Teil eines Hybridantriebs 25 des Fahrzeugs 2. Die elektrischen Maschinen 11, 19 können jeweils motorisch als Elektromotor und generatorisch als Generator betrieben werden. Eine mit nicht dargestellten Steuergeräten des Verbrennungsmotors 7 und der elektrischen Maschinen 11, 19 verbundene Steuerungseinheit 26 koordiniert deren Momente und/oder Momentgradienten. Die Verbindung ist durch gestrichelte Linien angedeutet. Die Steuerungseinheit 26 ist den Steuergeräten übergeordnet und koordiniert insbesondere auch die Steuergeräte der Getriebe 14, 22 und der schaltbaren Kupplungen. In der Steuerungseinheit 26 sind Führungsformeinheiten implementiert, die in Figur 2 beschrieben werden.

Der als Ottomotor 6 ausgebildete Verbrennungsmotor 7 ist mit nicht dargestellten Komponenten: Saugrohreinspritzung, elektronischem Gaspedal (E-Gas, elektronische Drosselklappe) und Katalysator versehen. Ein nicht dargestelltes Schwungrad des Verbrennungsmotors 7 ist mit einer ersten elektrischen Maschine 11 gekoppelt, die als Kurbelwellenstartergenerator ausgebildet ist. Das Istdrehmoment Eng_trqBs des Verbrennungsmotors 7 und das Istdrehmoment EIM1_trq der ersten elektrischen Maschine 11 addieren sich zum Antriebsmoment der ersten Antriebsachse 3, das mittels des ersten Getriebe 14 an die Antriebsräder 17 der ersten Antriebsachse 3 geleitet wird. Die zweite Antriebsachse 4 wird von der zweiten elektrischen Maschine 19 angetrieben, die das Antriebsmoment EIM2_trq erzeugt. Das Antriebsmoment EIM2_trq wird mittels des Getriebes 22 an die Antriebsräder 17 der zweiten Antriebsachse 4 weitergeleitet (Figur 1).

Bei Hybridfahrzeugen mit mehreren Antriebsachsen 3, 4 wirkt die aus Verbrennungsmotor 7, Getriebe 14 und elektrische(n) Maschine(n) 11 bestehenden Einheit 15 meist auf eine der Antriebsachsen 3, während eine oder mehrere weitere Antriebsachsen 4 von als Elektromaschinen-Getriebeeinheiten ausgebildeten Einheiten 24 angetrieben werden. Die elektrischen Maschinen 11, 19 erzeugen kaum Schwingungen, so dass die Elektromaschinen-Getriebeeinheiten 24 im Vergleich zu der Einheit 15, die den Verbrennungsmotor 7 enthält, über steifere Lagerungen an die Fahrzeugkarosserie angebunden werden können. Mechanische Spiele bzw. Lose sind bei den Elektromaschinen-Getriebeeinheiten 24 ebenfalls meist geringer. Damit sind an den Antriebsachsen 4 mit Elektromaschinen-Getriebeeinheiten 24 höhere Gradienten der Antriebsmomente beim Nulldurchgang erzielbar, ohne Einschränkungen im Fahrkomfort.

Die Figur 2 zeigt ein Blockschaltbild, das die Funktionsweise einer Steuerung des Verbrennungsmotors 7 und der elektrischen Maschinen 11, 19 des Hybridantriebs 25 angibt. Das mittels Fahrpedal 27 angegebene Fahrerwunschmoment trqDes wird auf die Eingänge der Führungsformeinheiten des Verbrennungsmotors 7 (Block 28) und des Summenmoments des ersten Antriebsstrangs (Block 29) gegeben. In der Führungsformeinheiten des Verbrennungsmotors 7 (Block 28) wird daraus ein Vorhalte-Sollmoment trqLeadEng bestimmt. Das Vorhalte-Sollmoment trqLeadEng für den Verbrennungsmotor 7 wirkt auf den langsamen Luftpfad. Der Luftmassenstrom wird entsprechend eingestellt. Bei optimalem Zündwinkel erzeugt der Verbrennungsmotor 7 das als Basismoment bezeichnete Drehmoment Eng_trqBs. Im stationären Betrieb entspricht das Basismoment Eng_trqBs dem Vorhalte-Sollmoment trqLeadEng. Im instationären Betrieb wirken dynamische Füllungseffekte im Saugrohr, die Übertragung vom Vorhalte-Sollmoment trqLeadEng auf das Basismoment Eng_trqBs lässt sich mittels Reihenschaltung eines Totzeitgliedes und eines Verzögerungsglieds erster Ordnung (PT1) näherungsweise beschreiben. Die Saugrohrdynamik ist meist stark vom Betriebspunkt des Verbrennungsmotors 7 (Lastpunkt, Motordrehzahl) abhängig, eine Modellierung bildet die Realität nur unzureichend ab. Somit ist eine ausreichend genaue Formung des Basismoment Eng_trqBs durch geeignete Vorgabe des Vorhalte-Sollmoments trqLeadEng nicht möglich. Um zum Beispiel einen genauen Nulldurchgang des Antriebsmomentes einzustellen sind weitere Maßnahmen erforderlich. Die Motorsteuerung eines modernen Verbrennungsmotors kann das momentane Basismoment Eng_trqBs anhand von gemessenen oder abgeschätzten Größen ermitteln, beim Ottomotor mit Saugrohreinspritzung z.B. aus Motordrehzahl, Saugrohrdruck, Zündzeitpunkt und Luftzahl λ. Die Drehmomentansteuerung einer modernen elektrischen Maschine 11, 19 weist eine sehr viel höhere Dynamik im Vergleich mit der Saugrohrdynamik eines Verbrennungsmotors 7 auf. Bei Hybridantrieben 25 können eine oder mehrere elektrische Maschinen 11 zur genauen Formung des zusammen mit dem Verbrennungsmotor 7 erzeugten Antriebsmomentes eingesetzt werden, wenn sie abhängig vom aktuellen Basismoment Eng_trqBs angesteuert werden. Damit kann auf Zündwinkeleingriffe verzichtet werden, vorausgesetzt, korrigierende Eingriffe in die elektrische(n) Maschine(n) 11 und damit verbundene Energieumsätze werden von einem oder mehreren nicht dargestellten elektrischen Energiespeichern über die erforderliche Lebensdauer unterstützt. In der Führungsformeinheit des Summenmoments des ersten Antriebsstrangs (Block 29) wird aus dem Fahrerwunschmoment trqDes ein gefilterte Summensollmoment trqDesFlt bestimmt. Von dem gefilterten Summensollmoment trqDesFlt für die erste Antriebsachse 3 wird das Basismoment Eng_trqBs abgezogen und als erste Momentanforderung an die erste elektrische Maschine 11 ausgegeben. Gleichzeitig wird der Betrag dieser Momentanforderung, wenn die Momentanforderung selbst negativ ist, bei negativer Momentanforderung auf den Eingang der Führungsformeinheiten der zweiten elektrischen Maschine 19 gegeben (Block 30). Über eine Begrenzungseinheit (Block 31) wird eine zweite Momentanforderung an die zweite elektrische Maschine 19 ausgegeben. Die Summe der Drehmomente der elektrischen Maschinen trqSumEIM ergibt in Summe mit dem Basismoment Eng_trqBs des Verbrennungsmotors 7 das Summenantriebsmoment trqSum.

Zur einfacheren Darstellung werden folgende Voraussetzungen angenommen:
- 1.: Die Übersetzungen der Getriebe 14 und 22 sind gleich groß, das Summenantriebsmoment trqSum = Eng_trqBs + EIM1_trq + EIM2_trq beider Antriebsachsen 3, 4 lässt sich unter Berücksichtigung der gemeinsamen Übersetzung auf die Summe der Radmomente umrechnen. Zusätzlich weisen die Antriebsräder 17 der beiden Antriebsachsen 3, 4 denselben Schlupf auf, damit sind die Drehzahlen der beiden elektrischen Maschinen 11, 19 und des Verbrennungsmotors 7 identisch.
- 2.: Der Wirkungsgrad jeder der elektrischen Maschinen 11, 19 ist ideal (= 1).
- 3.: Die Istdrehmomente der elektrischen Maschinen 11, 19 entsprechen auf grund hoher Dynamik in der Drehmomentenansteuerung nahezu den Solldrehmomenten.

- 4.: Am Verbrennungsmotor 7 erfolgen keine Zündwinkeleingriffe, das Istdrehmoment entspricht dem Basismoment Eng_trqBs.
- 5.: In stationären Fahrbetrieb gilt für die Solldrehmomente der elektrischen Maschinen 11, 19: trqDesEIM1 = trqDesEIM2 = 0, das heißt der elektrische Energiespeicher weist einen ausreichend hohen Ladezustand auf, um das Bordnetz zu versorgen. Ein Fahrerwunschmoment trqDes wird allein vom Verbrennungsmotor 7 erzeugt: Es gilt Eng_trqBs = trqDes. Diese Voraussetzung wird im allgemeinen Fall nicht erfüllt, da die elektrischen Maschinen zur Versorgung des Bordnetzes eingesetzt werden, vereinfacht die Darstellung aber wesentlich. Der Kraftschluss an den Antriebsrädern 17 der ersten Antriebsachse 3 ist ausreichend, um das vom Verbrennungsmotor 7 erzeugte Drehmoment zu übertragen.

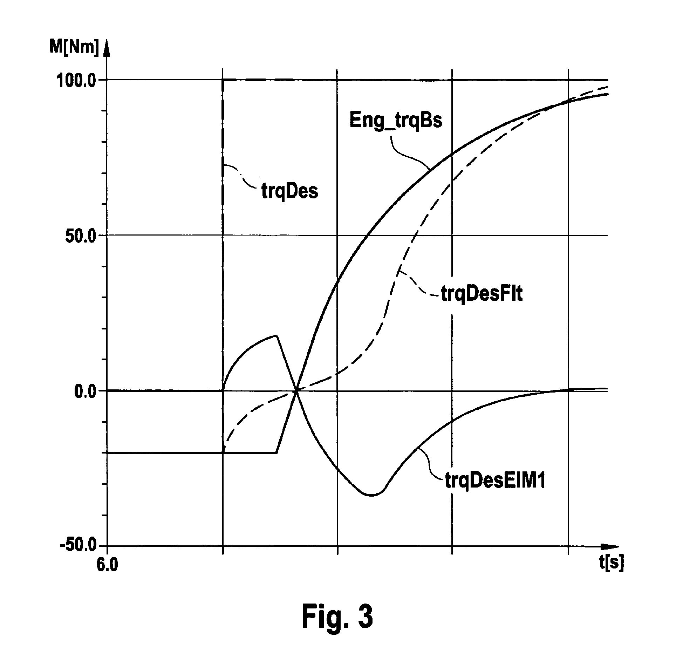

Die Figur 3 zeigt Simulationsergebnisse für einen Sprung im Fahrerwunschmoment trqDes von -20 Nm auf 100 Nm in einem Diagramm, bei dem auf der Ordinate ein Moment M und auf der Abszisse die Zeit t abgetragen ist. Die Übertragung vom Vorhalte-Sollmoment trqLeadEng auf das Basismoment Eng_trqBs ist mittels Reihenschaltung eines Totzeitgliedes und eines Verzögerungsglieds erster Ordnung (PT1) im Block 7 beschrieben, das Basismoment folgt dem Vorhalte-Sollmoment entsprechend verzögert. Der Block 29 erhöht sofort nach dem Sprung das gefilterte Summensollmoment trqDesFlt, was sich auf das Sollmoment trqDesEIM1 der ersten elektrischen Maschine 11 auswirkt und zu einem schnellen Ansprechen führt. Das Summen-Sollmoment trqDesFlt der ersten Antriebsachse 3 erhöht sich bereits zu einem Zeitpunkt, zu dem das Basismoment Eng_trqBs infolge der Totzeit noch keine Reaktion zeigt. Im weiteren Verlauf steigt das Basismoment Eng_trqBs schneller an als das Summen-Sollmoment trqDesFlt, das eine ausgeprägte Formung des Nulldurchganges aufweist. Um das schnell ansteigende Basismoment zu kompensieren, wird das Sollmoment trqDesEIM1 der ersten elektrischen Maschine 11 negativ, die erste elektrische Maschine 11 arbeitet somit generatorisch.

Erfindungsgemäß wird ein negatives Sollmoment trqDesEIM1 der ersten elektrischen Maschine 11 mit umgekehrtem Vorzeichen auf das Sollmoment trqDesEIM2 der zweiten elektrischen Maschine 19 aufgeschaltet. Damit ergeben sich zwei Vorteile:
- 1.: Die Belastung des elektrischen Energiespeichers reduziert sich, die von der ersten elektrischen Maschine 11 erzeugte generatorische Leistung wird von der zweiten elektrischen Maschine 19 benutzt.
- 2.: Es erfolgt ein schneller Aufbau des Summendrehmomentes der beiden Antriebsachsen 3, 4, wodurch eine hohe Dynamik des Fahrzeugs 2 erzielt wird.

Das Solldrehmoment trqDesEIM2 der zweiten elektrischen Maschine 19 wird im Block 30 geformt und im Block 31 entsprechend der zulässigen Momentenverteilung auf die beiden Antriebsachsen 3, 4 begrenzt.

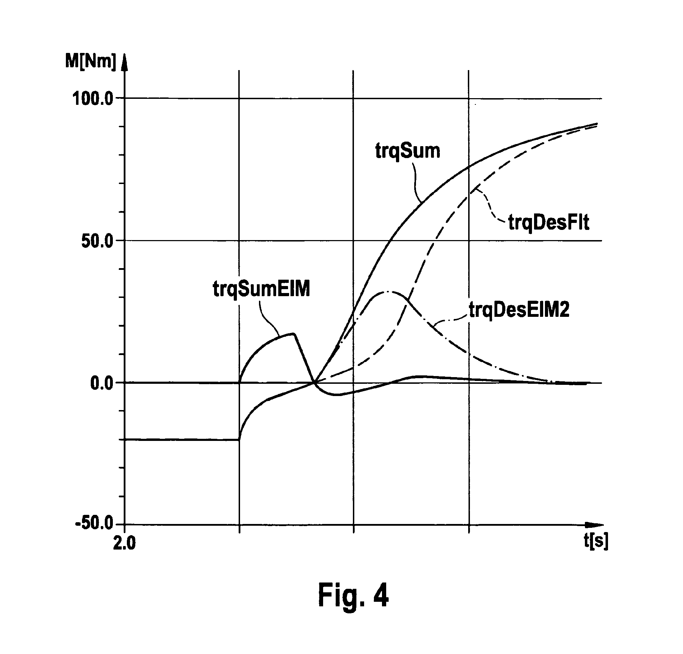

In Figur 4 ist das Solldrehmoment trqDesEIM2 bei einem Sprung im Fahrerwunschmoment trqDes entsprechend Figur 3 in einem Diagramm aufgetragen, bei dem auf der Ordinate das Moment M und auf der Abszisse die Zeit t abgetragen ist. Mit dem Summen-Sollmoment trqSumEIM der beiden elektrischen Maschinen 11, 19 bleibt auch die Belastung des elektrischen Energiespeichers gering, nachdem das Basismoment auf die Anforderung des Fahrers reagiert hat. Das Summen-Sollmoment trqSum für beide Antriebsachsen 3, 4 (Getriebeeingänge) zeigt im Vergleich zum Summen-Sollmoment trqDesFlt für die erste Antriebsachse 3 einen wesentlich schnelleren Anstieg, was die Dynamik des Fahrzeugs 2 erhöht.

Im Ausführungsbeispiel sind der einfacheren Darstellung halber die stationären Sollmomente bei der elektrischen Maschinen 11, 19 gleich Null gewählt. Im allgemeinen Fall, bei stationären Solldrehmomenten ungleich Null, ist eine entsprechende Koordination relativ zu den stationären Sollmomenten einzusetzen. Wirkungsgrade der elektrischen Maschinen 11, 19 ungleich Eins und unterschiedliche Übersetzungen der beiden Getriebe 14 und 22 können ebenfalls einfach berücksichtigt werden.

Die Parameter des Blocks 28 und des Blocks 29 sind drehzahl- und übersetzungsabhängig und werden unter Berücksichtigung der Saugrohrdynamik und der Momentgrenzen der elektrischen Maschinen 11, 19 aufeinander abgestimmt, um eine hohe Dynamik des Fahrzeugs 2 zu erzielen.

Die Erfindung kann bei allen Hybridantrieben 25 eines Fahrzeugs 2 mit mehreren Antriebsachsen 3, 4 eingesetzt werden, bei denen zumindest eine Antriebsachse 4 von einer oder mehreren elektrischen Maschinen angetrieben wird. Ein Einsatz bei Parallelhybriden und auch bei leistungsverzweigten Hybridantrieben ist möglich.

## Patentansprüche

1. Verfahren zum Betreiben eines Hybridantriebs eines Fahrzeugs, insbesondere eines Kraftfahrzeugs, mit mindestens einem Verbrennungsmotor (7) und mindestens einer ersten elektrischen Maschine (11) als Antriebsmaschinen eines ersten Antriebsstrangs (5) des Fahrzeugs und einem zugeordneten ersten Getriebe (14), wobei das Gesamtmoment der Antriebsmaschinen (7,11) bei einem Schalten des Getriebes (14) angepasst wird, um die Last am Getriebe zu reduzieren und/oder Drehzahlen entsprechend dem neuen Übersetzungsverhältnis zu verändern, und/oder der Momentgradient der Antriebsmaschinen (7,11) bei einem Übergang zwischen Zug- und Schubbetrieb auf einen vorgebbaren, maximalen Momentgradienten des resultierenden Gesamtmoments der Antriebsmaschinen des ersten Antriebsstrangs begrenzt wird, **dadurch gekennzeichnet, dass** die beim Anpassen und/oder bei der Begrenzung für einen verstärkt motorischen Betrieb der ersten elektrischen Maschine (11) zusätzlich benötigte Energie von mindestens einer weiteren, zweiten elektrischen Maschine (19) zum Antreiben mindestens eines weiteren Antriebsstrangs (18) zusätzlich erzeugt oder weniger verbraucht wird.

2. Verfahren nach Anspruch 1, **dadurch gekennzeichnet, dass** die beim Anpassen und/oder bei der Begrenzung durch einen verstärkt generatorischen Betrieb der ersten elektrischen Maschine (11) zusätzlich entstehende elektrische Energie der weiteren, zweiten elektrischen Maschine (19) zum Antreiben des weiteren Antriebsstrangs (18) für den Antrieb des Fahrzeugs genutzt wird.

3. Verfahren nach einem der vorhergehenden Ansprüche, **dadurch gekennzeichnet, dass** die Antriebsmaschinen (7,11) über den ersten Antriebsstrang (5) mindestens eine erste Antriebsachse (3) des Fahrzeugs antreiben und die zweite elektrische Maschine (19) über den zweiten Antriebsstrang (18) mindestens eine zweite Antriebsachse (14) des Fahrzeugs antreibt.

4. Verfahren nach einem der vorhergehenden Ansprüche, **dadurch gekennzeichnet, dass** der maximale Momentgradient der Begrenzung in Abhängigkeit der Steifigkeit der Lagerung so eingestellt ist, dass eine gemeinsame Lagerung von Verbrennungsmotor (7) und/oder erster elektrischer Maschine (11) und/oder erstem Getriebe (14) ruckfrei von einer ersten Endstellung in eine entgegengesetzte, zweite Endstellung verlagert wird.

5. Verfahren nach einem der vorhergehenden Ansprüche, **dadurch gekennzeichnet, dass** die Anpassung des Gesamtmoments der Antriebsmaschinen (7,11) des ersten Antriebsstrangs durch eine Moment- und/oder Leistungsanpassung der ersten elektrischen Maschine (11) und/der eine Veränderung des Zündwinkels des Verbrennungsmotors (7) in vorgegebenen Änderungsgrenzen erfolgt.

6. Verfahren nach einem der vorhergehenden Ansprüche, **dadurch gekennzeichnet, dass** die Begrenzung durch eine Moment- und/oder Leistungsanpassung der ersten elektrischen Maschine (11) und/oder eine Veränderung des Zündwinkels des Verbrennungsmotors (7) in vorgegebenen Änderungsgrenzen erfolgt.

7. Vorrichtung zum Betreiben eines Hybridantriebs eines Fahrzeuges, insbesondere eines Kraftfahrzeugs, mit mindestens einem Verbrennungsmotor (7) und mindestens einer ersten elektrischen Maschine (11) als Antriebsmaschinen eines ersten Antriebsstrangs (15) des Fahrzeugs und einem zugeordneten ersten Getriebe (14),
wobei Mittel vorgesehen sind, die
das Gesamtmoment der Antriebsmaschinen (7,11) bei einem Schalten des Getriebes (14) angepassen, um die Last am Getriebe zu reduzieren und/oder Drehzahlen entsprechend dem neuen Übersetzungsverhältnis zu verändern, und/oder den Momentgradienten der Antriebsmaschinen bei einem Übergang zwischen Zug- und Schubbetrieb auf einen vorgebbaren, maximalen Momentgradienten des resultierenden Gesamtmoments der Antriebsmaschinen des ersten Antriebsstrangs begrenzen, **dadurch gekennzeichnet, dass** die beim Anpassen und/oder bei der Begrenzung für einen verstärkt motorischen Betrieb der ersten elektrischen Maschine (11) zusätzlich benötigte Energie von mindestens einer weiteren, zweiten elektrischen Maschine (19) zum Antreiben mindestens eines weiteren Antriebsstrangs (18) zusätzlich erzeugt oder weniger verbraucht wird.

## Claims

1. Method for operating a hybrid drive of a vehicle, in particular a motor vehicle, having at least one internal combustion engine (7) and at least a first electrical machine (11) as drive machines of a first drive train (5) of the vehicle, and an associated first transmission (14), with the total torque of the drive machines (7, 11) being adapted when the transmission (14) is shifted, in order to reduce the load on the transmission and/or to change rotation speeds in accordance with the new transmission ratio, and/or the torque gradient of the drive machines (7, 11) being limited to a predefinable, maximum torque gradient of the resulting total torque of the drive machines of the first drive train when a transition is made between the traction mode and the overrun mode, **characterized in that** the energy additionally required during adaptation and/or during limiting for increased motor operation of the first electrical machine (11) is additionally generated or used less by at least one further, second electrical machine (19) for driving at least one further drive train (18).

2. Method according to Claim 1, **characterized in that** the electrical energy of the further, second electrical machine (19) which is additionally created during adaptation and/or during limiting by increased generator operation of the first electrical machine (11) is used to drive the further drive train (18) for driving the vehicle.

3. Method according to one of the preceding claims, **characterized in that** the drive machines (7, 11) drive at least a first drive axle (3) of the vehicle by means of the first drive train (5), and the second electrical machine (19) drives at least a second drive axle (4) of the vehicle by means of the second drive train (18).

4. Method according to one of the preceding claims, **characterized in that** the maximum torque gradient of the limiting process is set as a function of the rigidity of the bearing such that a common bearing of the internal combustion engine (7) and/or the first electrical machine (11) and/or the first transmission (14) is moved smoothly from a first end position to an opposite, second end position.

5. Method according to one of the preceding claims, **characterized in that** the total torque of the drive machines (7, 11) of the first drive train is adapted by adapting the torque and/or power of the first electrical machine (11) and/or changing the ignition angle of the internal combustion engine (7) in predefined change limits.

6. Method according to one of the preceding claims, **characterized in that** the limiting process is performed by adapting the torque and/or power of the first electrical machine (11) and/or changing the ignition angle of the internal combustion engine (7) in predefined change limits.

7. Apparatus for operating a hybrid drive of a vehicle, in particular a motor vehicle, having at least one internal combustion engine (7) and at least a first electrical machine (11) as drive machines of a first drive train (5) of the vehicle, and an associated first transmission (14), with means being provided which adapt the total torque of the drive machines (7, 11) when the transmission (14) is shifted, in order to reduce the load on the transmission and/or to change rotation speeds in accordance with the new transmission ratio, and/or limit the torque gradients of the drive machines to a predefinable, maximum torque gradient of the resulting total torque of the drive machines of the first drive train when a transition is made between the traction mode and the overrun mode, **characterized in that** the energy additionally required during adaptation and/or during limiting for increased motor operation of the first electrical machine (11) is additionally generated or used less by at least one further, second electrical machine (19) for driving at least one further drive train (18).

## Revendications

1. Procédé de fonctionnement d'un entraînement hybride d'un véhicule, en particulier d'un véhicule automobile, comprenant au moins un moteur à combustion interne (7) et au moins une première machine électrique (11) en tant que machines d'entraînement d'une première chaîne cinématique (5) du véhicule et une première transmission associée (14), le couple total des machines d'entraînement (7, 11) étant adapté lors d'une commutation de la transmission (14) afin de réduire la charge appliquée à la transmission et/ou de modifier des régimes en fonction du nouveau rapport de démultiplication, et/ou le gradient de couple des machines d'entraînement (7, 11) étant limité lors d'un transfert entre un mode de traction et un mode de poussée à un gradient de couple maximal prédéfinissable du couple total résultant des machines d'entraînement de la première chaîne cinématique, **caractérisé en ce que** l'énergie supplémentaire nécessaire lors de l'adaptation et/ou de la limitation pour un mode de fonctionnement moteur accru de la première machine électrique (11) est produite en outre par au moins une deuxième machine électrique supplémentaire (19) pour entraîner au moins une chaîne cinématique supplémentaire (18) ou est moins consommée.

2. Procédé selon la revendication 1, **caractérisé en ce que** l'énergie électrique de la deuxième machine électrique supplémentaire (19) pour l'entraînement de la chaîne cinématique supplémentaire (18), produite à titre supplémentaire lors de l'adaptation et/ou lors de la limitation, par un mode de fonctionnement générateur accru de la première machine électrique (11), est utilisée pour l'entraînement du véhicule.

3. Procédé selon l'une quelconque des revendications précédentes, **caractérisé en ce que** les machines d'entraînement (7, 11) entraînent, par le biais de la première chaîne cinématique (5), au moins un premier essieu d'entraînement (3) du véhicule et la deuxième machine électrique (19), par le biais de la deuxième chaîne cinématique (18), entraîne au moins un deuxième essieu d'entraînement (4) du véhicule.

4. Procédé selon l'une quelconque des revendications précédentes, **caractérisé en ce que** le gradient de couple maximal de la limitation est ajusté en fonction de la rigidité du support sur palier de telle sorte qu'un support sur palier commun du moteur à combustion interne (7) et/ou de la première machine électrique (11) et/ou de la première transmission (14) soit décalé sans à-coup d'une première position d'extrémité dans une deuxième position d'extrémité opposée.

5. Procédé selon l'une quelconque des revendications précédentes, **caractérisé en ce que** l'adaptation du couple total des machines d'entraînement (7, 11) de la première chaîne cinématique est effectué par une adaptation du couple et/ou de la puissance de la première machine électrique (11) et/ou par une modification de l'angle d'allumage du moteur à combustion interne (7) dans des limites de variation prédéfinies.

6. Procédé selon l'une quelconque des revendications précédentes, **caractérisé en ce que** la limitation est effectuée par une adaptation du couple et/ou de la puissance de la première machine électrique (11) et/ou par une variation de l'angle d'allumage du moteur à combustion interne (7) dans des limites de variation prédéfinies.

7. Dispositif pour le fonctionnement d'un entraînement hybride d'un véhicule, en particulier d'un véhicule automobile, comprenant au moins un moteur à combustion interne (7) et au moins une première machine électrique (11), en tant que machines d'entraînement d'une première chaîne cinématique (5) du véhicule, et une première transmission associée (14), dans lequel des moyens sont prévus, lesquels
adaptent le couple total des machines d'entraînement (7, 11) lors d'une commutation de la transmission (14), afin de réduire la charge au niveau de la transmission, et/ou afin de modifier des régimes en fonction du nouveau rapport de démultiplication, et/ou limitent le gradient de couple des machines d'entraînement lors d'un transfert entre un mode de traction et un mode de poussée à un gradient de couple maximal prédéfinissable du couple total résultant des machines d'entraînement de la première chaîne cinématique, **caractérisé en ce que** l'énergie supplémentaire nécessaire lors de l'adaptation et/ou de la limitation pour un mode de fonctionnement moteur accru de la première machine électrique (11) est produite en outre par au moins une deuxième machine électrique supplémentaire (19) pour entraîner au moins une chaîne cinématique supplémentaire (18) ou est moins consommée.
